# EUROPEAN PATENT APPLICATION

(11) **EP 4 730 609 A1**
(43) Date of publication of application: **22.04.2026**
(21) Application number: 23961710.3
(22) Date of filing: 20.12.2023
(51) Int. Cl.: H02J 13/00

(54) **METHOD AND SYSTEM FOR SUPERVISING AND MONITORING THE COMMUNICATION BUSES OF A DIGITAL SUBSTATION, METHOD FOR TRAINING A NEURAL NETWORK TO DETERMINE A SUBSTATION STATUS OF A DIGITAL SUBSTATION, EQUIPMENT AND CORRESPONDING COMPUTER-READABLE MEMORY**

(71) Applicant: WEG Equipamentos Elétricos S.A., 89256-900 Jaraguá do Sul, SC (BR)
(72) Inventor: OLESKOWICZ, Bruno Alexandre, 89053-316 Blumenau, SC (BR); NETO, Carlos de Souza Moraes, 89062-100 Blumenau, SC (BR); MACHADO, Gabriel, 89012-510 Blumenau, SC (BR); SCHEFFER, Rafael Bonet, 89035-600 Blumenau, SC (BR); DE SOUZA, Jean Gustavo, 89062-130 Blumenau, SC (BR)
(74) Representative: Regimbeau
(86) International application number: PCT/BR2023/050470
(87) International publication number: WO 2025/129281

(57) **Abstract**

The present invention relates to a method and a system for supervising and monitoring the communication buses of a digital substation. Furthermore, the present invention relates to an equipment for monitoring the communication bus of a digital substation and to a method for training a neural network for monitoring and diagnosing the communication bus of a digital substation and also to computer read memories containing a set of instructions that, when executed, perform the method for supervising and monitoring the communication buses of a digital substation.

## Description

### Field of application

The present invention belongs to the field of circuit arrangements and systems for the supply or distribution of electrical power, more specifically to the supervision of devices, systems, and methods for the monitoring of electrical substations for the transformation of electrical current and electrical potential. Finally, the present invention also refers to the field of computerimplemented arrangements based on machine learning.

### Introduction

The present invention relates to a method and a system for fully digital supervision and monitoring of the communication buses of a digital substation, by means of the implementation of a digital system and method of monitoring all devices and equipment of the substation, including process or process-level communication buses (between yard components and intermediate components (at the "Bay" level)) and station or station-level communication buses (between intermediate components and supervisory components (SCADA)). The input messages and/or information obtained from the SS components, at distinct predetermined intervals of reading and/or measurement controlled and commanded by a processing unit and/or resulting from continuous readings and/or measurements controlled and commanded by a processing unit, together with the input messages and/or information from the sender, the communication link and the receiver, are compared to expected predetermined values comprised in at least one file comprising the substation configuration description language (e.g., an SCL file that will be described later) and/or at least one file comprising the substation configuration description (e.g., an SCD and/or ICD and/or CID and/or SSD and/or IID and/or SED file, which will be described later), and/or other similar files comprising one or more configurations of the substation and its components), these files being made available by the customer and/or by the operator and/or user and/or maintainer of the substation and/or being part of a specific SCL file for the substation monitored by the system and method of the invention. This comparison determines the condition of the substation and any message and/or information that is different and/or replaced by another and/or altered and/or adulterated and/or and/or altered in its sequence and/or additional (read here as "extra" information or information beyond what is expected) from one or more communication protocols and/or from each of the components and the substation as a whole, results in data and output instructions for the substation SCADA in the form of a warning and/or triggering of one or more alarms in case of offsets or critical results. This comparison is executed by at least one processing unit of the system of the invention comprising at least one computer-readable memory storing at least one SCL file of the substation and computer-executable instructions capable of executing a method according to the invention.

Optionally and additionally, the comparison between the messages and/or information read from the SS elements and the information from the SCD file is carried out by a machine learning model represented by a neural network trained to provide one or more output instructions in response to one or more input messages and/or information, in particular, to diagnose and generate at least one output instruction to the substation maintainer in the form of a procedure suggestion for maintaining the operation and/or correcting the parameters of one or more components of the substation or of the substation as a whole.

The present invention, therefore, also relates to a method for training a neural network to diagnose the condition of substation components and the substation as a whole, wherein the neural network is trained with a set of predetermined expected or ideal data, in the most diverse possible substation operating situations, so that this neural network is capable of, from a message and/or input information, for example, but without limiting the invention, a certain voltage and current value of an IED and/or one or more offsets from the expected communication protocol data, identify possible offsets from the predetermined expected or ideal values contained in the SCD file, determine an anomaly condition and suggest correction procedures and, eventually, carry out the correction by means of the remote intervention in one or more system components, trigger alerts and/or alarms, etc. Thus, the method and system of the invention are capable of detecting problems early, carrying out preventive maintenance and taking corrective measures in real time, an essential condition for ensuring the safe and efficient operation of the electrical infrastructure.

The invention also relates to an equipment for executing the method for fully digital supervision and monitoring of the communication buses of a digital substation and corresponding computer-readable memories.

### Background of the Invention

The electrical substations of the nature dealt with here are, preferentially, but without limiting the invention, power generation, distribution, generation, transmission, storage, industrial and mobile substations and SKIDs of all types.

Although several factors can be considered critical, it is important to highlight the importance of Protection, Control and Supervision Systems (SPCS), which are being improved every day, undergoing a revolution especially in terms of data acquisition and availability techniques, in a constant search for optimization and, in particular, for an increasingly digital solution to also make the corresponding substations digital.

These enhancements, which comprise monitoring substation communication buses and must ensure that the protections receive analog and digital field information correctly to be able to operate satisfactorily, while the monitoring system must be independent of the components that publish and subscribe to messages on the communication buses, that is, dependent only on the data acquisition units (*Merging Units* or MU) for digitalization of analog signals from current transformers (CT), potential transformers (PT) and binary signals from yard equipment, have been challenging technicians and engineers around the world for several years.

### State of the art

Due to the demands discussed so far, some substation manufacturers and integrators have started developing systems that seek the aforementioned improvements, and it is possible to identify basically two types of solutions on the market, which we will call here **type A** and **type B** solutions.

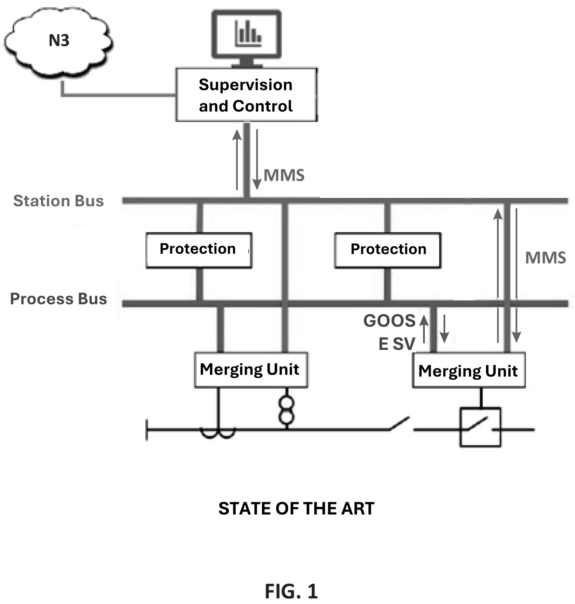

In **type A** solutions, known from the state of the art and also discussed, for example, in the "Digital Substation Workshop: Challenges and Perspectives" ("*Workshop Subestação Digital: Desafios e Perspectivas*"), organized by the Protection and Automation Study Committee (CE B5) of CIGRÉ-Brasil on August 9 and 10, 2023, in the city of Florianópolis, Santa Catarina, Brazil (available at https://ce-b5.cigre.org.br), and represented in Figure 1 of the attached drawings, some manufacturers understand that by monitoring only the information made available by MU and intelligent electronic devices (Intelligent Electronic Devices or IED, such as protection and control relays) - this information is defined in the IEC-61850 standard - the bus is safe. The problem is that, in the **type A** solution, a separate, independent monitoring system is not provided, that is, this solution uses the substation's supervisory control and data acquisition (SCADA) systems. Furthermore, the monitoring provided by a **type A** solution is not capable of identifying the real reason for a failure, it only indicates that the information is not being received. Type A monitoring is also done manually by the operator, which leaves room for monitoring errors and failure to detect a fault.

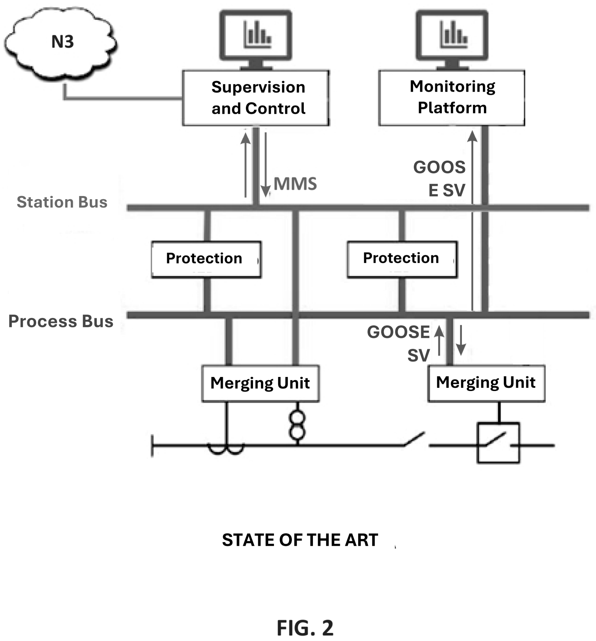

In **type B** solutions, known from the state of the art and also discussed, for example, in the "Digital Substation Workshop: Challenges and Perspectives" ("*Workshop Subestação Digital: Desafios e Perspectivas*"), organized by the Protection and Automation Study Committee (CE B5) of CIGRÉ-Brasil on August 9 and 10, 2023 in the city of Florianópolis, Santa Catarina, Brazil (available at https://ce-b5.cigre.org.br), and represented in Figure 2 of the attached drawings, some manufacturers meet precisely the requirement of monitoring independence, monitoring only what is being published on the process bus, verifying several information, but, even though this solution provides for a separate, independent system, interconnecting the process and station buses, the system still does not communicate with the substation's SCADA supervisory system, that is, monitoring is based only on the information published by the MU and IED. Furthermore, the **type B** solution, in addition to repeating some of the problems of the type A solution, does not use the operator/customer infrastructure for alerting, which implies additional expenses with the implementation of new policies for event analysis, such as the costs arising from the unnecessary mobilization of trained personnel to assist the substation locally. It also prevents the same alarms from being transmitted to the operator/customer's operations center as to the national electricity system operator, if there is, for example, a requirement to receive reports from the digital system. Not communicating with SCADA harms automation, since the connection with SCADA eliminates the need for intervention or analysis at the substation installation site.

There are other solutions in the known state of the art that refer to the monitoring of bus in a substation, such as, for example, patent document CN111917187 entitled *"INTELLIGENT SUBSTATION CLOUD MONITORED CONTROL SYSTEM",* which reveals a smart substation cloud monitoring system which comprises a plurality of remote field exchange terminals arranged in a target area of said smart substation. Moreover, the specifications of this document describes that the network platform communicates by means of a network protocol that integrates MMS and GOOSE, and the functions of collecting information from the entire station, preventing improper jamming operations, and similar functions are accomplished. In particular, the aforementioned document alludes to the use of certain files, i.e., the SCL, SCD, as well as other elements such as: IEDs, GOOSE and SV messages. In particular, the monitoring of the substation system in this document occurs physically (wirelessly) separated from the rest of the topology through a remote cloud monitoring center.

Although document CN111917187 refers to a system for controlling and automating an electrical power distribution system, it does not relate to monitoring the communication bus of a digital SS on an independent computer monitoring platform with the possible use of artificial intelligence to report the causes of problems related to the SS equipment. Furthermore, additional disadvantages regarding message integrity verification are apparent.

The CN111917187 system acquires information from the smart substation and uses it for its primary equipment control functions (circuit breakers, switches, transformers, etc.). In the event of missing information or information different from that expected as compared to the SCL file, the system does not inform that there is anything different. What can happen is that the system does not carry out commands on the primary equipment. In other words, the CN111917187 system uses the information to control the smart substation, but does not monitor what is happening on the substation's communication buses to diagnose errors in GOOSE, Sampled Values and MMS communication, for example.

It should be noted that none of the solutions in the relevant state of the art comprise a computing platform independent of the other substation hardware, ensuring complete independence and that, in addition, the known solutions do not acquire the information that each MU and IED makes available, therefore not characterizing a complete monitoring system, since simply monitoring the network does not ensure that the IED and/or MU will function satisfactorily and vice versa, as these elements may be indicating that everything is correct, when in fact an error may occur in the network, such as, for example, in the case of failure of one or more redundant channels, downtime, incorrect configuration, incorrect distribution of information, unknown message, etc., in addition to cases of cybersecurity incidents.

As can be inferred from the above descriptions, there is room for a method and a system for supervision and monitoring of the communication buses of a digital substation, equipment, method for training a neural network for monitoring and diagnosing the bus of a digital substation and corresponding computer-readable memories, capable of surpassing the state of the art, providing a monitoring of the process bus, station bus and monitoring system acquiring signals from the bus based on both the information from the MU and IED, as well as the information published by the MU and IED. Additionally, it can also monitor the elements that make up the network, such as switches and GNSS, but not limited to these.

### Objects of the Invention

One of the objectives of the present invention is, therefore, a method for supervising and monitoring the communication buses of a digital substation, in accordance with the characteristics of claim 1 of the attached set of claims.

Another objective of the present invention is a system for supervising and monitoring the communication bus and a digital substation, according to the characteristics of claim 11 of the attached set of claims.

Another objective of the present invention is a system for supervising and monitoring the communication bus and a digital substation, according to the characteristics of claim 14 of the attached set of claims.

Another objective of the present invention is a method for training a neural network for monitoring and determine a substation state of a digital substation, according to the characteristics of claim 17 of the attached set of claims.

Yet another objective of the present invention is an equipment for monitoring the communication bus of a digital substation, in accordance with the characteristics of claim 18 of the attached set of claims.

Another objective of the present invention is to provide a computer-readable memory, in accordance with the features of claim 19 of the append set of claims.

Additional features and details thereof are presented in the dependent claims.

### Brief description of the drawings

For better understanding and visualization of the object of the present invention, it will now be described with reference to the accompanying drawings, representing the technical effect obtained by exemplary embodiments without limiting the scope of the present invention, in which, schematically:
Figure 1: shows a schematic view of a state-of-the-art substation bus, controlled by a known type A solution;
Figure 2: shows a schematic view of a state-of-the-art substation bus, controlled by a known type B solution;

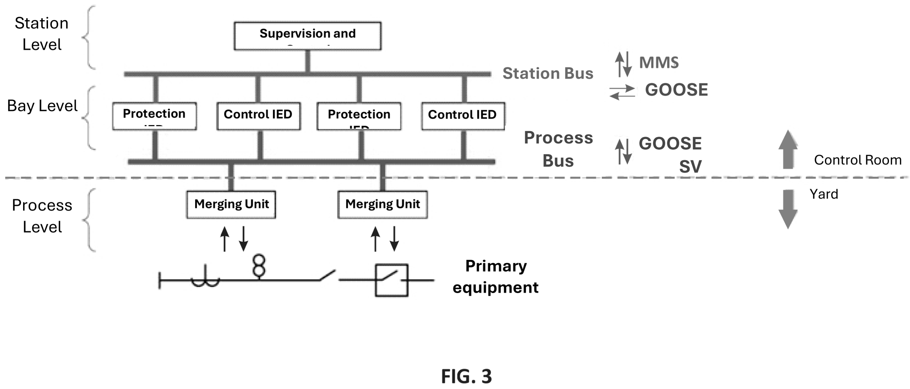

Figure 3: shows a schematic view of a substation bus to which a method and system according to the invention will be applied; and
Figure 4: shows a schematic view of a substation bus supervised and monitored by the method and system according to the invention.

### Detailed description of the invention

The following detailed description refers to the appended drawings in which, by way of non-limiting illustration, embodiments of the present invention are shown. These embodiments are described to allow a person skilled in the art to reproduce the results. Other embodiments resulting from structural, mechanical, logical, and electrical changes are possible and can be carried out without departing from the spirit and scope of the present invention. The following detailed description should therefore not be understood in a restrictive or limiting manner.

The present invention basically relates to a method and a system for supervising and monitoring the communication buses of a digital substation. Furthermore, the present invention relates to an equipment for monitoring the communication bus of a digital substation and to a method for training a neural network for monitoring and diagnosing the communication bus of a digital substation and also to computer-readable memories containing a set of instructions that, when executed, perform the method for supervising and monitoring the communication buses of a digital substation.

In the context of the present invention, the term "substation" relates to any and all electrical power substations for transforming electrical current and/or electrical potential, whether or not forming part of an electrical power distribution system, in accordance with definitions known in the state of the art. The term "digital substation" (SS) relates to a digital substation according to the invention.

In the context of the present invention, the term "current transformer" (CT) relates to any and all electromagnetic devices known in the state of the art that transform a high-value electric current into a low-value current and vice versa, maintaining the same phase relationship between the primary and secondary currents, executing tasks known in the state of the art such as, for example, but without limiting the invention, current measurement, circuit protection, insulation between high-voltage circuit and low-voltage circuit, etc.

In the context of the present invention, the term "potential transformer" (PT) relates to any and all electromagnetic devices known in the state of the art that transform a high-value electrical voltage into a low-value voltage and vice versa, maintaining the same phase relationship between the primary and secondary voltages, executing tasks known in the state of the art such as, for example, but without limiting the invention, current measurement, circuit protection, insulation between high-voltage circuit and low-voltage circuit, etc.

In the context of the present invention, the term "SKID" relates to any and all frameworks known in the state of the art in the form of a chassis on which a power substation is arranged.

In the context of the present invention, the term "IED" (abbreviation of the term Intelligent Electronic Devices) relates to any and all devices known in the state of the art comprising a microprocessor-based integrated controller for power system equipment, such as, for example, but without limiting the invention, circuit breakers, transformers, capacitor banks, as well as protection and control relays and the like.

In the context of the present invention, the term "MU" (abbreviation of the term Merging Units) relates to any and all data acquisition units for digitizing analog signals from CTs and PTs and binary signals from the yard equipment of a substation, also known in the state of the art, consisting basically of an electrical circuit that receives analog voltage and current values, an analog-to-digital converter that samples the signals and a processor that standardizes the digital signal to work in accordance with standards such as, for example, but without limiting the invention, the IEC 61850 standard. Internal processing uses distinct blocks, which causes a delay in the signal. To correct this delay, an external time synchronizer (GNSS or similar) must be used.

In the context of the present invention, the term "GOOSE" (abbreviation of the term Generic Object Oriented Substation Event) relates to generic substation events (which is a control model defined in accordance with standards such as, for example, but without limiting the invention, the IEC 61850-8-1 standard), being a protocol that works with a fast and reliable engine for transferring event data in entire electrical substation networks, comprising, but without limiting the invention, binary supervision messages, alarms and commands, made available in message format to travel on Ethernet networks.

In the context of the present invention, the term "SV" (abbreviation of the term Sampled Values) relates to the messaging protocols responsible for transmitting instantaneous values of the primary voltage and current quantities of the power system of the power substation, comprising, but not limiting the invention, sampled analog values made available in message format to travel on Ethernet networks, as defined, for example, but not limiting the invention, in the IEC-61850-9, IEC-61950-9-2LE and IEC-61869-9 standards.

In the context of the present invention, the term "MMS" (abbreviation of the term Manufacturing Message Specification) relates to an international standard protocol, defined in a standard, for example, but without limiting the invention in the IEC61850 standard, which deals with messaging systems for transferring real-time process data and supervisory control information between networked devices or computer applications, comprising, but without limiting the invention, client/server communication between IED and SCADA.

In the context of the present invention, the term "LLDP" (abbreviation of the term Link Layer Discovery Protocol) relates to a protocol widely used to discover information about devices on a local network. In power plants, LLDP can be used to discover and manage information about networkconnected devices such as switches, routers, servers, and other network equipment.

In the context of the present invention, the term "PCAP" (abbreviation of the term packet Capture) is a file that contains network packet capture data. It can contain detailed information about network traffic, including alarm packets if captured during network monitoring or analysis.

In the context of the present invention, the term "latency" refers to the delay or time it takes for a data packet to travel from one point to another in the network or within the system. In the context of the kernel, low latency is especially crucial to ensure that operations and data transmissions occur as quickly as possible, without significant delays.

In the context of the present invention, the term "kernel" relates to the central core of an operating system, being essential for the functioning of a computer or processing unit, being responsible for managing system resources and providing an interface between the hardware and the software, that is, it is a program that has total control over the system. The kernel is therefore the lowest layer of the operating system and operates in privileged mode, meaning it has direct access and full control over hardware resources. It acts as a kind of supervisor, ensuring that different parts of the operating system and software execute their tasks in an organized and secure manner.

In the context of the present invention, the term "alarm packet stream" relates to the continuous transmission of data packets related to a specific alarm or event in a communication network. In monitoring, automation, or security systems, devices often send data packets to report alarm conditions, such as a system failure, a critical event, or an abnormal condition. An alarm packet stream describes the continuous flow of information encapsulated in data packets that are transmitted over the network in order to communicate and log relevant events. This may include information about the type of alarm, location, severity, time of occurrence, and other associated data, and is therefore crucial for rapid detection and response to critical situations, ensuring the safety and efficient operation of systems in a variety of contexts, including the power and automation industry.

In the context of the present invention, the term "SCADA" (abbreviation of the term Supervisory Control), also referred to as SCADA supervisory system, relates to systems that use software to monitor and supervise the variables and devices of industrial and non-industrial processes and equipment connected through specific communication servers/drivers.

In the context of the present invention, the term "Ethernet Network" relates to any and all wired computer networking technologies commonly used in local area networks, metropolitan area networks, and wide area networks.

In the context of the present invention, the term "PTP " (abbreviation of the term Precision Time Protocol) relates to any and all protocols used to synchronize the system time in various systems on a LAN to a common master clock on the LAN, especially important in latency-sensitive environments, as in the case of a digital substation of the invention, being a highprecision time synchronization signal made available via an Ethernet network, defined in standards such as, for example, but without limiting the invention, the IEEE1588v2 standard.

In the context of the present invention, the term "GNSS" (abbreviation of the term Global Navigation Satellite System) relates to any and all equipment known in the state of the art that uses a constellation of satellites in Earth orbit to provide positioning, timing and navigation information to users anywhere on the planet. In power substations, GNSS is used for several purposes, primarily for time synchronization and precise positioning, crucial information for the coordinated and efficient functioning of power grids, ensuring that devices and equipment are operating in the same time interval, which is essential for the reliable transmission and distribution of power.

In the context of the present invention, the term "Switches" relates to, in a broader sense, to any and all switching devices used to connect and disconnect electrical circuits, such as, for example, but without limiting the invention, load switches, protection switches, maintenance switches, etc. and, in a narrower sense, to any and all devices that connect all equipment in an ethernet network.

In the context of the present invention, the term "SNMP" (abbreviation of the term Simple Network Management Protocol) relates to, in a broader sense, any and all standard internet protocols for managing devices in IP networks, comprising, but not limited to, routers, computers, servers, workstations, printers, racks, etc. and, in a more restricted sense, to any and all protocols used to report what is happening in network assets, in this case GNSS and switches.

In the context of the present invention, the term "SCL" (abbreviation of the term Substation Configuration description Language) relates to the language and representation format specified in standards such as, for example, but without limiting the invention, in the IEC 61850 standard for configuring electrical devices in substations. Substation Configuration Language (SCL) is a standardized language used to describe and configure the components and systems within an electrical power substation, allowing different protection, control and monitoring devices to be configured and interoperable, facilitating integration and communication between them. The SCL specifies a hierarchy among configuration files by defining four groups: System Specification Description (SSD) File, IED Capabilities Description (ICD) File, Substation Configuration Description (SCD) File, Configured IED Description (CID) File, Configured IED Description (CID) File and Instantiated IED Description (IID) File and System Exchange Description (SED) File, with files of the ICD, CID, SSD, SCD, IDD and SED types, among others, being related to the SCL and generally being part of standards, such as, for example, but without limiting the invention, the IEC 61850 standard, with the SCL file and its derivatives being essential to ensure the interoperability and proper functioning of the devices within an electrical power substation, facilitating the configuration, maintenance and operation of the electrical system. SCL files can be created in several formats, such as UML (Unified Modeling Language), XML (Extensible Markup Language), IEC 61850 (a communication standard for substation automation), among other proprietary software formats used in the electrical engineering field.

In the context of the present invention, the term "ICD" (abbreviation of the term IED Capability Description) relates to the configuration of an IED, with the definitions of logical devices, logical nodal points, descriptions or reports, data sets, etc., with the ICD file generated by the IED configuration tool, provided by each manufacturer, defining the capabilities and functionalities of the Intelligent Electronic Devices (IEDs) within the substation, detailing their measurement, control, and protection capabilities.

In the context of the present invention, the term "SSD" (abbreviation of the term System Specification Description) relates to the complete specification of a substation automation system including a single-line diagram of the substation and its functionalities, in addition to describing the general specifications of the substation, including the topology, main equipment, communication requirements and any other information relevant to the substation design.

In the context of the present invention, the term "SCD" (abbreviation of the term Substation Configuration Description) relates to files that can be created in several formats, such as XML (from the acronym Extensible Markup Language), IEC 61850 (a communication standard for substation automation), among other proprietary software formats used in the area of electrical engineering, comprising the description of the complete details of the substation, containing, for example, information on all IEDs in the substation, communications configuration data and a complete description of the substation, comprising information on:
- The substation topology containing details about the physical framework of the substation, such as the arrangement of equipment, layout of circuit breakers, transformers, relays, disconnect switches, buses and other devices;
- Equipment configuration, such as specific information about each component, including its technical characteristics, nominal capacities, manufacturing data and electrical connections;
- Diagrams and schemes such as drawings and diagrams that illustrate the arrangement of equipment and the interconnection between them, which may include single-line, three-line, logical diagrams and other schemes that represent the electrical configuration of the substation; and
- Control and protection information, such as details about the control, protection, automation and monitoring systems used in the substation, including operating logic, configuration of protection relays, SCADA systems and other control devices.

In the context of the present invention, the term "CID" (abbreviation of the term Configured IED Description) relates to a protocol used for communication between an IED configuration tool and an IED, containing specific information about how each individual IED is configured within the substation, including functioning parameters, communication configurations, protection configurations, among others.

In the context of the present invention, the term "IID" (abbreviation of the term Instantiated IED Description) relates to a file that defines the configuration of an IED for a design and is used as a data exchange format from the IED configurator to the system configurator.

In the context of the present invention, the term "SED" (abbreviation of the term System Exchange Description) relates to a file that must be exchanged between system configurators of different designs.

In the context of the present invention, the expression "substation condition" should be understood as being the current real-time functioning state of the SS and/or of one or more SS components and/or of the communication between two or more SS components and/or of the communication between at least one of the SS components with the SCADA, which may comprise, but does not limit the invention, one or more normal operating conditions; and/or one or more abnormal operating conditions; and/or one or more critical event conditions. This comparison made by the processing unit results in data and/or output instructions in the form of warnings and/or offset and/or inconsistency alarms and, in the case of using, additionally or optionally, a neural network for monitoring and diagnosis, the data and/or output instructions will be generated in the form of warnings and/or alarms and also suggestions for procedures for maintaining the operation and/or correcting the parameters of one or more SS components or the SS as a whole.

In the context of the present invention, **a normal operating condition** indicates that the values read by the monitoring system in the form of messages and/or input information are all within an expected and ideal range of the predetermined parameters and described in at least on SS SCL file, without any offset or inconsistency having been detected.

In the context of the present invention, an **abnormal operating condition** indicates that there has been at least one offset and/or at least one inconsistency of one or more of the data read in relation to the expected and ideal ranges of the predetermined parameters and described in at least one SS SCL file. An abnormal operating condition comprises, for example, but without limiting the invention, offset such as the absence of scheduled messages, abnormal intervals between scheduled messages, abnormal propagation time (latency) for scheduled messages with a fixed publication period, etc., and/or inconsistencies such as loss of message integrity, absence of synchronization signals, presence of unexpected messages, etc. An abnormal operating condition may generate specific warnings and/or alarms warning of offsets and/or inconsistencies and, in the case of the use, additionally or optionally, of a neural network for monitoring and diagnosis, alerts with suggestions for maintenance and/or exchange of components, in addition to the counting of operating hours and maintenance or replacement intervals of one or more SS components, etc.

In the context of the present invention, a **critical event condition** indicates that there was at least one critical offset and/or at least one critical inconsistency. A critical event condition comprises, for example, but not limited to, offsets such as the absence of scheduled messages, abnormal intervals between scheduled messages, abnormal propagation time (latency) for scheduled messages with a fixed publication period, etc., and/or inconsistencies such as loss of message integrity, absence of synchronization signals, presence of unexpected messages, etc. A critical event condition may generate one or more alarm conditions, indicating that the protection may act incorrectly or even not operate, bringing risks to the installation and/or people in its surroundings, in addition to economic impacts, cyberattacks, etc., in the case of the use, additionally or optionally, of a neural network for monitoring and diagnosis, alerts with suggestions for maintenance and/or exchange of components, in addition to the counting of operating hours and maintenance or replacement intervals for one or more SS components, etc.

It should be noted that all substation conditions of the invention take into account the result of the comparison between the expected and ideal parameters of each SS component contained in at least one SS SCL file with the data read and evaluated by the processing unit (or, optionally and additionally, by a neural network of the processing unit trained in accordance with the machine learning model of the invention), and may comprise, in addition to monitoring the integrity, completeness and synchronization of the messages exchanged between the SS elements and the processing unit, additional parameters relating to the values contained in the messages, that is, the physical quantities read from the SS elements *versus* the expected values.

In the context of the present invention, the expression "determining a substation condition" refers to determining the current state of the SS by means of reading at predetermined intervals or at any time, both controlled and commanded by a processing unit of the system of the invention, one or more messages received from one or more SS elements and/or published by one or more SS elements and/or measured data from one or more SS components and their comparison with the data contained in at least one SS SCL file and/or a specific SCL file for the SS supervised and monitored by the system and method of the invention. This comparison is executed by at least one processing unit of the system of the invention executing at least one step of the method of the invention and, optionally or additionally, by a machine learning model represented by a neural network trained to provide one or more output instructions in response to one or more input messages and/or information. The result of this comparison determines the condition of each of the SS components and/or the SS as a whole and/or the communication between two or more SS components and/or the communication between at least one of the SS components and SCADA, in the form of a substation condition.

As already described above, it is possible, from the pool of the parameters of the messages received to the expected values and ranges described in at least one SS SCL file, in addition to the identification of a normal operating condition, to obtain information indicative of one or more abnormal functioning conditions of one or more of the SS components and one or more critical event conditions of functioning or non-functioning of one or more of the SS components. This information allows monitoring of the SS and helps to accurately determine the status of each SS component, so that appropriate measures can be taken for correction, maintenance, replacement, alarm and even immediate interruption of the operation of one or more SS components or the SS as a whole.

In the context of the present invention, the term "monitor" relates to one or more tasks of monitoring a substation condition, further comprising terms related to monitoring and their synonyms and/or equivalent terms such as, for example, but without limiting the invention, supervision, monitoring, surveillance, verification, evaluation, measurement, etc.

Also in the context of the present invention, the term "neural network" relates to a machine learning model that may be a convolutional neural network, in which the term "train" refers to adjusting the parameters of the machine learning model so that, from a number of reference parameters associated with the ideal and/or expected values of each SS component and the SS as a whole, it is capable of, from one or more input data comprising the measured data, providing one or more output data in the form of one or more substation conditions for one or more SS components and the SS as a whole, in addition to instructions for the monitoring platform. It should be noted that, in addition to a convolutional neural network, it is also possible to use other learning algorithms such as, for example, Q-learning or even LLM (abbreviation of the term Large Language Model) and other appropriate networks and/or algorithms.

That said, the present invention relates to a method and system for supervising and monitoring communication buses in a digital substation on a computer monitoring platform independent of the SCADA of the SS, in order to obtain information relating to data acquisition units (MUs), relating to protection and control relays (IEDs), relating to switches and GNSS by means of protocols, preferentially, but without limiting the invention, GOOSE, SV, MMS and SNMP protocols and/or similar. Furthermore, the pre-existing and/or subsequently added SCADA system, which supervises and controls the substation, communicates with said system of the invention to monitor on a monitoring platform that is independent of the equipment of said SS, using computer instructions and/or, optionally and additionally, artificial intelligence to report offset and diagnose causes of problems related to the SS equipment. In particular, for communication to occur between the monitoring platform and the SCADA system, the processing unit of the system of the invention comprises at least one MMS server to enable communication, which ensures alarms to the substation operator according to the station condition level. It should be noted that, in addition to the MMS protocol, other suitable protocols may be used, such as, but without limiting the invention, DNP3, ModBus, IEC104 type protocols, among others.

### System according to the invention

A system for supervising and monitoring the communication buses of a digital substation, according to the present invention, presupposes the existence of at least one power substation (SS), which may or may not be mounted on a SKID chassis, comprising one or more buses, one or more current transformers (CT) and/or one or more potential transformers (PT), one or more IEDs, one or more MUs, one or more SCADAs, at least one ethernet network, at least one GNSS, one or more switches, one or more switches, one or more relays, one or more actuators, transformers in general, reactors, capacitor banks, storage batteries, compensators, generators, possibly one or more electric motors and/or fans and/or heat exchangers, smoke detectors, fire alarms, audible and/or light alarms and all other components necessary for the functioning of a substation.

The system for supervising and monitoring the bus of a digital substation of the invention essentially comprises a computer monitoring platform independent of the SCADA of the SS with at least one processor or processing unit, the latter comprising at least one memory that stores information and computer-executable instructions and, optionally or additionally, at least one trained convolutional neural network, wherein the processing unit is configured to provide output data and/or output instructions about one or more station conditions in response to the reception, as input information, of one or more messages and/or input information obtained from one or more SS components, wherein the execution of the instructions executes one or more steps of the method for monitoring the communication buses in a digital substation of the invention.

In addition to at least one memory, at least one processing unit and, optionally and additionally, at least one trained neural network, the system of the invention may further comprise:
- At least one processing equipment for acquiring and presenting information/instructions;
- At least one central server;
- At least one database;
- At least one communication and data network;
- One or more sets of input information;
- One or more sets of instructions; and
- Other devices and/or equipment necessary for the functioning of the system and the execution of a method in accordance with the invention.

Furthermore, the system for monitoring communication buses in a digital substation may further comprise, eventually and additionally, other devices and/or equipment necessary for the functioning of one or more elements of the system of the invention for the execution of one or more methods according to the invention.

The memory, processors, processing equipment for acquiring and presenting information/instructions, servers, databases, communication and data networks and other devices and/or equipment eventually and additionally comprised by the system, are all interconnected by the SS communication buses and/or by one or more communication and data networks. Pictures and data are stored as one or more electrical signals and the processing of these signals is done by one or more components of the system of the invention.

In a preferred non-limiting embodiment of the invention, one or more elements of the system of the invention can execute one or more steps of the methods of the invention individually, without a connection to one or more communication and data networks, locally storing the processed information and data, for later sharing as soon as one or more connections to one or more communication and data networks are established or re-established.

### Processor or computer system or processing circuit

A processor is, in the context of the invention, a central processing unit or CPU or a computer system or even a processing circuit that carries out the instructions of a computer program or application, processing and executing arithmetic, logical operations and data input and output, whereby the computer program is stored on a computer-readable medium having memory for data storage, connection to one or more communication and data networks, and having one or more, local and/or centralized and/or decentralized and/or cloudbased remote databases and/or an information storage and retrieval environment, and also equipped with all the usual state-of-the-art peripherals, being capable of exchanging information with electronic and physical media, interfaces, applications, mobile equipment, other memory devices, etc.

A processor according to the invention can be, form part of, or be subdivided into one or more modules. The term module, according to the invention, relates to an application-specific integrated circuit (ASIC), an electronic circuit, a processor (shared, dedicated or group of processors) and a memory which executes one or more programs software or firmware. It further relates to a combinational logic circuit and/or other suitable components capable of providing the functionalities herein.

A processing circuit in accordance with the invention may also be configured, optionally and additionally, to determine a neural network in accordance with the invention.

This processing circuit may therefore include a processor such as a central processing unit (CPU), a microcontroller, a microprocessor, a field programmable gate array (FPGA), a graphics card, or special hardware for convolutional neural networks such as the trained convolutional neural network of the invention.

Both the central server of the invention's system and the processing equipment for acquiring and presenting information/instructions of the invention each have at least one processing unit or processor or computer system or processing circuit, which are preferentially independent of each other and/or autonomous.

### Computer-readable memory

A computer-readable memory, in the context of the present invention, is any memory or storage device, remote or local, volatile or non-volatile, transient or non-transitory (permanent), that stores information and instructions, and in particular a computer-readable memory that stores at least one SS SCL file and instructions capable of executing a method according to the invention.

### Computer-readable medium

A computer-readable medium according to the invention is a medium comprising instructions that, when executed in a system or equipment of the invention, executes one or more methods according to the invention, in particular, a method in which, from one or more input information comprising the messages of each element of the SS and/or the measured data, compares these with the data of the SS SCL file monitored by the system and method of the invention, determines at least one substation condition and/or provides one or more output data and/or instructions, in which the output data comprises one or more substation conditions of one or more SS components and of the SS as a whole, and the output instructions further comprise one or more instructions for the computer monitoring platform, in which the output data and/or instructions are unambiguously associated with the respective substation component or with the substation as a whole.

### Neural network

The computer-readable medium may further, optionally and additionally, comprise a trained convolutional neural network which, in the context of the present invention, is a machine learning model configured to, from one or more input information comprising measured data, provide one or more output data in the form of one or more substation conditions of one or more SS components and the SS as a whole, triggering of alarms, in addition to at least one diagnosis and at least one output instruction for the processing unit and/or computer monitoring platform, in which the output data and/or output instructions are unambiguously associated with the respective component of the substation or the substation as a whole.

A trained convolutional neural network in accordance with the invention may comprise interconnected groups of artificial neurons (e.g., neuron models), and may also be a computational device or be represented as a method that will be executed by a computational device.

A trained convolutional neural network in accordance with the invention may be, for example, but without limiting the invention, a deep feedforward trained convolutional neural network, with an architecture such that it delivers results quickly and accurately and that it can also and especially be executed on portable processors such as, for example, in a manner not limiting the present invention, processors of cell phones, smartphones, tablets and the like, with high processing speed and concomitant accuracy, and may further comprise layers of neurons that can be configured in a receptive field arranged side by side.

### Processing equipment for acquiring and presenting information/instructions

A processing equipment for acquiring and presenting information/instructions or simply equipment of the invention, is an interface between the system of the invention and the users of the system, and may include any device capable of processing and storing data and/or information and communicating via the communication and data network, and may comprise, without limiting the scope of the invention, compatible physical, analog, digital, light sensors and combinations thereof, including monitors, television sets, cameras, lasers, reflectors, light barriers and the like.

The processing equipment for acquiring and presenting information/instructions of the invention comprises a user interface with the ability to:
i. Import SCD, CID, ICD and XML type files;
ii. Real-time visualization of network packets;
iii. User configuration of the monitoring server;
iv. User configuration of alarms;
v. User configuration of alarm times;
vi. User modification of SCD files;
vii. Addition of components to be monitored; and
viii. Download in PCAP format of the packets contained in the alarms.

An intermediate device of the invention is an optional device that can be implemented externally and between the portable equipment and remote server, serving primarily to eventually carry out monitoring tasks remotely.

In a preferred embodiment of the invention, the equipment is a portable equipment, preferentially a mobile phone or cell phone or smartphone or tablet and the like.

Furthermore, the portable equipment of the invention may further comprise devices, peripherals and accessories usual for portable equipment of the nature dealt with herein.

Portable equipment may therefore comprise any device capable of processing and storing data and/or information and, preferentially, communicating via the communication and data network, and may also include personal computers, servers, code readers, telemetry, telematics, biometrics, other cell phones, smartphones, tablets, laptops, smart devices. Each portable equipment may comprise one or more memories that store instructions, information and data and may execute one or more programs or applications to execute various functions associated with the system and methods according to the invention.

Although the portable equipment of the invention is a device capable of interconnection with one or more of the components of the system of the invention, the execution of a method for determining a substation condition, according to the invention, can occur autonomously and, therefore, independently of a connection with any other element of the system, as will be explained in detail later.

### Central server

A central server is, in the context of the invention, a computer or computer system or computer circuit or even a set of instructions executable on computer, with one or more centralized computing systems or one or more data processing centers, which makes services and resources available or stores them in and through a communication and data network. It comprises one or more electronic processors capable of executing tasks from a computer program or set of instructions stored on a computer-readable medium, preferentially a computer equipped with a processor, memory for data storage, connection to one or more communication and data networks and to one or more remote databases and/or an information storage and retrieval environment, local and/or centralized and/or decentralized and/or in the cloud, and also equipped with all the usual peripherals of the state of the art, being capable of exchanging information with the electronic and physical medium, interfaces, applications, mobile equipment, other memory devices, etc.

A server may be at least one web server that delivers or serves web pages, an application server that handles application operations between users and applications or databases, a cloud server, a database server, a file server, a service server, a game server implementing games or services for a game, and a media server providing media such as streaming video or audio.

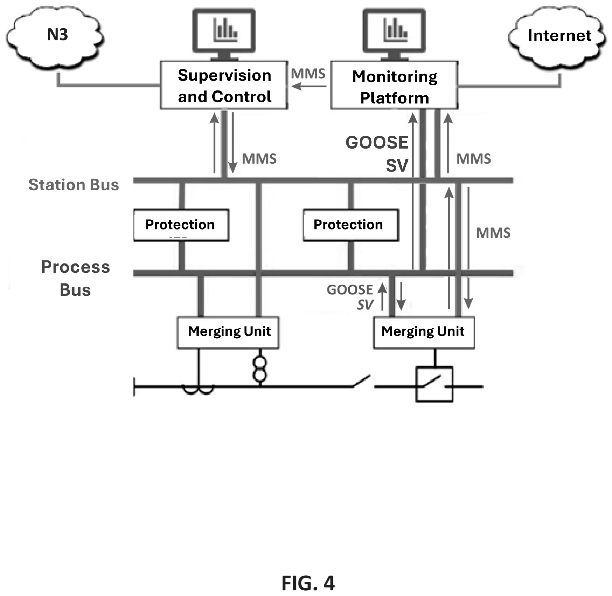

The server of the invention may also be a remote control center (N3) of the user/operator/client/maintainer of the SS, as represented in figures 1 and 2, representative of the state of the art, and in Figure 4, representative of the solution according to the present invention.

The system of the invention may include one or more processors for processing commands and information according to the instructions of computer programs and one or more memories that store information in one or more data frameworks, which may be a centralized SS management system or network, for example, but not limited to a server that may be executed privately by a third-party entity or the same entity that is executing the server.

A computer program in accordance with the invention is a program executable on a processor of the invention and thus also executable on a processor of the portable equipment of the invention, for example in application form.

The system can also be imagined as a publicly accessible network system (e.g., a distributed decentralized computing system). Each processor comprises memory that stores information and data and can execute one or more sets of instructions to execute various functions associated with the system and methods according to the invention.

The central server of the invention is, in particular, the server that hosts and manages the system database, further comprising at least one SS SCL file monitored by the system and method of the invention.

### Database

A database or database in accordance with the invention is any and all sets of data, files, information, instructions and logs that form organized collections of data that are related to each other, hosted in one or more memories or storage devices of the system of the invention and that can be accessed, fed and managed by the data processing centers of the invention. A database of the invention may further comprise at least one SS SCL file monitored by the system and method of the invention.

Both the servers and the processors and other equipment and devices of the system of invention may comprise one or more databases, independent and/or interconnected.

### Communication and data network

A communication and data network is, in the context of the present invention, one or more substation buses, preferentially, but without limiting the invention, at least one substation communication bus and/or any substation bus used for communication purposes. In this way, communication buses replace all the cabling normally used to connect the primary equipment of the SS and the IEs.

A communication and data network, in the context of the present invention, comprises a centralized or decentralized network that interconnects one or more active or passive components of the system in accordance with the invention. The servers, processors, data processing center, database and portable equipment of the invention may be connected to one or more communication and data networks, ethernet networks, physical memories, cloud and similar, the internet, one or more data and/or program clouds, computer terminals, mobile devices, telephone devices, barcode readers, QR-Codes, Data Matrix codes and the like, credit cards, NFC or BLE devices, gas stations and service stations, in short, to any equipment or interface necessary, directly or indirectly, for the execution of a method in accordance with the invention.

The communication and data network may comprise any wired or wireless connection, the Internet, or any other form of communication, and may comprise any number of different communication and data networks between any server, devices, resource and system and/or other servers, devices, resources, and systems described herein. The communication and data network may allow communication between various computing resources or devices, servers and systems, and may employ different types of networks, for example, but not limited to computer networks, telecommunications networks (*e.g.* cell phones), mobile, cable, radio and the like wireless data networks and any combination of the foregoing and/or other networks.

### Set of information

A set of information according to the invention is a set of messages and/or information further comprising a data set acquired and/or transmitted and/or stored by and in one or more of the components of the system of the invention and comprises a plurality of information relevant to the SS components, the supervision of the SS, the monitoring of the SS and the operators or controllers of the SS.

Non-limiting examples of information of this nature are:
a. SS description and configuration data;
b. Input data read and/or measured of the physical quantities of each element of the SS;
c. Additional identification data for each element of the SS;
d. Neural network training data sets;
e. Resulting output data sets and their respective output instructions;
f. SS condition indicators or codes; and
g. Optionally, a list of periodic visual or instrumental verification items and the corresponding additional SS condition codes.

The *SS description and configuration data* essentially comprises the data of at least one SS SCL file that describes and configures the components and systems within the SS, allowing different protection, control and monitoring devices to be configured and interoperable, facilitating integration and communication between them. This data further comprises the predetermined ideal and/or expected settings and values of the message protocols exchanged between the SS elements and the processing unit of the invention. The at least one SS SCL file is preferentially stored in at least one memory of the processing unit of the system of the invention.

The *data read and*/*or measured of the physical quantities of each element of the SS* comprise, without limitation, the numerical values measured directly or indirectly in each SS component, such as, for example, but without limiting the invention, values of current, voltage, impedance, reactance, temperature and other physical quantities and usual information and which correspond to the data and information of at least one SS SCL file and/or of at least one file and/or of at least one database created for this purpose. This data comprises the data that will serve as input data for the processing unit and/or, additionally and optionally, for the trained convolutional neural network, which will apply the machine learning model to this input data. The data correspond to the current data at the time of reading (last update), the immediately previous data, any historical series, events of special interest, and so on.

The *additional identification data for each element of the SS* may comprise data on the equipment and devices contained in at least one SS SCL file, such as, for example, but without limiting the invention, data such as date of installation and start of operation, inventory number, installation location, maintenance and/or replacement history, etc.) and any other information that may be useful for the supervision and maintenance of the SS and its components. This data comprise current data at the time of its update or last update, immediately preceding data, any historical series, events of special interest, and so on.

The *neural network training data sets* comprise the set of expected or ideal predetermined data, in the most different possible substation operating situations, used for training a convolutional neural network in a machine learning model, so that this neural network is capable of, from an input data and/or information, for example, but without limiting the invention, a certain voltage and current value of a protection relay, identify possible offsets from the expected or ideal predetermined values contained in at least one SS SCL file, determine an anomaly condition and a diagnosis and suggest corrections or even carry out the correction through remote intervention in one or more components of the system, trigger alerts and/or alarms, etc. These expected or ideal predetermined data, as well as their ranges or limiting, maximum and minimum values, correspond, individually, to the information contained in at least one SS SCL file and, optionally and additionally, to the information of the manufacturers of the respective components, any corresponding standards, the expected and/or ideal tolerances or ranges for each element of the SS and, in general, to the technical specifications of the SS contained in at least one SS SCL file.

The *resulting output data sets and their respective output instructions* comprise at least one response to one or more input data submitted to the processing unit or, additionally and optionally, to the trained convolutional neural network, comprising numeric, alphanumeric data, SS condition codes, visual and/or audible alerts, *stream* of alarm packets and also the respective instructions for correction, maintenance or replacement of one or more SS components. This resulting output data will be used to determine the SS condition.

The *SS condition indicators or codes* comprise at least one code uniquely assigned to each of the respective resulting output data and their respective output instructions, comprising numeric, alphanumeric data, SS condition codes, visual and/or audible alerts and also the respective instructions for correction, maintenance or replacement of one or more SS components.

Optionally, there may also be one or more *lists of periodic visual or instrumental verification items and their respective additional SS condition codes,* in addition to the information in at least one SS SCL file, comprising any and all important information for and inherent to the SS operation.

As previously described, the determination of a substation condition refers to the determination of the current real-time functioning state of the SS, that is, the operating state of each of the SS components and of the SS as a whole, and may comprise, but not limit the invention, one or more normal operating conditions indicating that the values read by the monitoring system are all within an expected and ideal range of predetermined parameters and contained in at least one SS SCL file; and/or one or more abnormal operating conditions of offset of one or more of the data read in relation to the expected and ideal ranges of the predetermined parameters and contained in at least one SS SCL file; and/or one or more critical event conditions linked or not to one or more alarm conditions (incorrect protection operation, cyberattack, etc.) and/or one or more maintenance and/or exchange of components alerts.

### Set of instruction

A set of instructions, according to the invention, comprising one or more instructions, sequential and/or non-sequential, unique and/or repeated, the set of instructions being acquired and/or transmitted and/or stored by and in one or more of the components of the system of the invention, being, essentially, instructions executable on machines or processors and even instructions to operators for a human being carrying out one or more tasks of verification, maintaining or replacing one or more SS components.

The output instructions comprise the output instructions generated by the processing unit and may be executed and/or stored by and on a server, in a processing center, in a processing equipment for acquiring and presenting information/instructions of the invention, and may also be stored in one or more databases or other computer-readable storage medium, volatile or non-volatile.

The output instructions according to the invention also optionally and additionally comprise the output data of the trained neural network in response to the input data processed by it.

The set of instructions may also be the set of steps and possible substeps of a method of the invention executed by the system of the invention or in one or more components of the system of the invention.

### Other devices and/or equipment necessary for functioning

The system of the invention may further comprise, eventually, any and all additional devices and/or equipment that are necessary for the functioning of the system of the invention to execute one or more methods of the invention.

### Functioning of the system for monitoring the communication bus of a digital substation

The system according to the invention, fed with information and instructions and with access to messages, information, instructions and updates of these messages, information and instructions, comprises memories that store information and instructions, at least one processor, optionally and additionally a trained convolutional neural network, remote and/or local central server, remote and/or local databases, computer-readable media and, optionally and additionally, at least one portable processing equipment, which execute a method of the invention for determining at least one substation condition, resulting from the interaction of one or more of its components that carry out one or more steps and possible subtasks that may or may not be sequential, possibly repeating themselves, in isolation or in a grouped manner, if necessary and depending on the conditions determined for the method.

In short, the processing unit loads a digital SS configuration file, which is created when parameterizing a system of the invention, using the GOOSE, SVs and MMS protocols. At this point, SCL type files (ICD, SSD, SCD, CID, IID, SED) are created, which comprise all the information relating to the substation and the respective system.

These files are uploaded into the invention's computer-readable memory, which then has all the information about how the communication network between the system elements is formed, for example, how the MUs and IEDs communicate with each other and what information is being made available on the network (GOOSE and SVs).

With the system in functioning and connected to all communication and data networks, any message and/or information that is different and/or replaced by another and/or altered and/or adulterated and/or and/or altered in its sequence and/or additional (read here as "extra" information or information beyond what is expected) of one or more communication protocols and/or of each of the components and of the substation as a whole, which, when compared to at least one SCL file, is different from what is expected/determined by the SCL file, causes the system to trigger at least one alarm and report the offset and/or inconsistency to the SCADA of the SS, preferentially, but without limiting the invention, via MMS message.

Additionally, the system of the invention will also acquire MMS messages from MUs and IEDs, and, as determined, for example, but without limiting the invention, in the IEC-61850 standard, other offsets and/or inconsistencies may be used for monitoring, such as the lack of one or more GOOSE messages, problems in the SVs, etc.

In this way, the invention system monitors both the information being published on the communication and data network and the equipment that is publishing and subscribing to the messages.

Furthermore, the invention system also monitors the other equipment that composes it, such as switches and GNSS, via data acquisition from the SNMP protocol of each equipment.

In other words, the invention's system carries out complete monitoring of all system components, as well as all information being published on the communication bus, requiring the SS maintainer to interpret what is happening and correct it. This condition alters when, additionally or optionally, the processing unit comprises a neural network trained to monitor, diagnose and suggest corrections to the substation maintainer.

In more detail, the main functioning steps of the system of the invention comprise, in a non-limiting manner, the acquisition by the processor, using a predetermined specific database or library, of the input data coming from one or more SS components, in which this acquisition is done by reading at least one message and/or by reading Ethernet message packets, for example, but without limiting the invention, of the messages individually and/or in groups and/or in packets, such as, for example, in bursts of 32 messages received by the respective ports of the processing unit, wherein these messages and/or message packets are subjected, in the processing unit, to comparison with the data of the substation's SCL file or, optionally or additionally, in the trained convolutional neural network.

To this end, the system of the invention carries out, by means of the processing unit, the acquisition of input information from at least one of the SS components, through the low latency communication and data network and/or the low latency communication bus itself, establishing a connection via MMS protocol defined in at least one standard, for example, but without limiting the invention, in the IEC61850 standard, for the acquisition of information relating to protection relays; the acquisition of information via layer 2 (layer that transmits the protocols) for GOOSE, SV and LLDP protocols; and connection via SNMP protocol for acquiring information related to switches, routers and GNSS time synchronization units.

The acquisition of input information with low latency by the processing unit of the system of the invention is achieved due to the direct connection between the network devices of the processing unit and the network monitor applications, that is, it occurs through the bypass of the operating system kernel.

Once this first reading has been completed, cores of the processing unit dedicated to processing each communication network are used and the input information is compared with the information available in the SCD.

When monitoring through the MMS and SNMP protocols, the following information is acquired by the processing unit:
∘ All logical nodes requested by the user and maintained in the SCL;
∘ Receiving reports of values acquired via MMS by value alteration;
∘ Receiving reports of values acquired via MMS by quality alteration;
∘ Receiving reports of values acquired via MMS by period; and
∘ Receiving all information contained in MIBs via SNMP protocol.

When monitoring through the GOOSE, SMV and PTP protocols, the following information is acquired by the processing unit:
∘ All GOOSE message informational fields;
∘ GOOSE message length;
∘ GOOSE message composition;
∘ GOOSE message arrival and relay times;
∘ GOOSE message receiving sequence;
∘ GOOSE message operating mode;
∘ All *Sampled Value* message informational fields;
∘ *Sampled Value* message length;
∘ *Sampled Value* message composition;
∘ *Sampled Value* message arrival and relay times;
∘ *Sampled Value* message receiving sequence;
∘ *Sampled Value* message operating mode;
∘ Receiving packets not provided in the provided SCL file;
∘ Existence of IEEE1588 packets for PTP;
∘ Message 1588 arrival and relay times; and
∘ Altering IEEE1588 packet to PTP.

The input messages and/or information are compared by the processing unit and/or, optionally and additionally by a neural network, to the values and information contained in at least one SS SCL file and, once this comparison has been made, at least one substation condition is determined, wherein the MMS server of the processing unit informs the SCADA of all offsets and/or inconsistencies detected in the substation condition, in the form of:
∘ Alarms related to each acquired item;
∘ Reading acquired packets
∘ Statistical information of the packets;
∘ Statistical information of the monitor;
∘ PCAP file of the alarm packet; and
∘ Stream of the alarm packets.

After at least one substation condition has been determined and reported, the events (offsets and/or inconsistencies) detected are logged in the processing unit database, more specifically:
∘ Store the network message flow in the processing unit's memory and/or database; and
∘ Log the data flow at the time of the event in the processing unit's memory and/or database.

The data and, in particular, the output instructions generated in response to at least one given station condition, comprise informing the operator or person responsible for supervising and/or maintaining the substation, by means of the remote central processor or the portable equipment processor, one or more substation condition codes and communicating at least one procedural instruction equivalent to:
- Graphical interface for accessing information;
- Through software installed on the personal computer or remote device of the SS user/operator/client/maintainer, the same will have access to:
   ∘ All events;
   ∘ Copy of the data flow at the time of the event;
   ∘ Visualization of the current communication network;
   ∘ Configuration and analysis of the SCL file;
   ∘ Configuration of the acquisition server;
   ∘ Take cybersecurity actions such as visiting the panels where the alarms occurred, blocking doors;
   ∘ Preparation for intervention such as acquiring the correct material for replacement (network cables, optical cords, IEDs).
   ∘ Prevent a system misconfiguration from remaining in operation undetected.

Preferentially, the steps can be repeated in full for the other SS components, with the decision-making process being left until the end, accumulating the decisions for a group of components, in addition to taking into account a possible autonomous execution of the method by means of portable equipment, without connection to a central server or central database or any communication and data network.

It should be noted that the steps, tasks, and subtasks are executed using directly or indirectly one or more of the active or passive components of the system of the invention, based on one or more of the information of the system of the invention, according to a method of the invention and, always, according to one or more of the instructions of the system of the invention.

That said, it is clear that, by executing the steps described above, the system of the invention determines the operating state of one or more SS components and of the SS as a whole, in the form of a substation condition, based on reading the messages received or recorded and/or the data received from each component or the SS, by submitting the results of the readings of the input information to the processing unit or, additionally and optionally, to a machine learning model.

By associating the measured values with their predetermined ideal value, for example, described in at least one SS SCL file, the system of the invention is capable of, in addition to identifying possible discrepancies, gathering indicative information about the functioning status of each SS component or the SS as a whole, independently and completely.

With this information, the system helps determine the status of each SS component and the SS, and, optionally or additionally, when submitting the input information to a trained neural network, suggests to the operator/user/customer/maintainer of the SS the appropriate and necessary operating and/or maintenance measures by means of suggestions and/or procedural instructions.

### Method for supervision and monitoring of communication buses of a digital substation

The method for supervising and monitoring the communication buses of a digital substation, in accordance with the invention, is a computerimplemented method that comprises, preferentially, the following method steps:
A. Acquiring, by means of at least one processing unit, messages and/or input information from at least one of the SS components through at least one communication and data network and/or the SS 's own communication bus, by establishing a connection via the MMS, GOOSE and SV protocol, a connection via layer 2 and a connection via the SNMP protocol;
B. Comparing, by means of at least one processing unit, the messages and/or input information of at least one of the SS components obtained in the previous step to the predetermined ideal values comprised in at least one SCL file of at least one memory and/or database of the processing unit;
C. Determining, by means of the processing unit, based on the comparison of the previous step, at least one substation condition, wherein a substation condition may be at least one normal operating condition, without offsets and/or inconsistencies, and/or at least one abnormal operating condition, with at least one offset and/or at least one inconsistency, and/or at least one critical event condition, with at least one critical offset and/or at least one critical inconsistency;
D. Informing, by means of the processing unit, at least one Supervisory Control and Data Acquisition SCADA of the SS, independent of the processing unit, the at least one substation condition determined in the previous step, in the form of messages and/or output instructions, together with at least one of the offsets and/or critical offsets and/or at least one of the inconsistencies and/or critical inconsistencies detected;
E. Logging, by means of the processing unit, in the at least one memory and/or database of the processing unit, the at least one determined and reported substation condition, in which the logs further comprise the data from the communication and data network messages flows and the data at the time of at least one offset and/or at least one inconsistency; and
F. Repeating steps A through E during the substation communication bus monitoring operation.

In **step A,** the input messages and/or information from at least one of the SS components are acquired by the processing unit by means of the establishment of at least one connection via MMS protocol for acquiring information relating to protection relays; at least one connection via layer 2 (layer that transmits the protocols) for acquiring GOOSE, SV, and LLDP protocols; and at least one connection via SNMP protocol for acquiring information related to switches, routers, and GNSS time synchronization units. It should be noted that, as defined, the establishment of one or more of the connections described herein can be carried out either through at least one communication and data network or through the SS 's own communication bus, and there may also be a mixed form of connection, however, regardless of the form of connection, this must be a connection in accordance with the invention, that is, low latency, and the acquisition of input information with low latency by the processing unit of the system of the invention is achieved due to the direct connection between the network devices of the processing unit and the network monitor applications, that is, it occurs through the bypass of the operating system kernel.

**Step A** therefore comprises monitoring through the MMS and SNMP protocols, through which the processing unit acquires the following information:
∘ All logical nodes requested by the user and maintained in the SCL;
∘ Receiving reports of values acquired via MMS by value alteration;
∘ Receiving reports of values acquired via MMS by quality alteration;
∘ Receiving reports of values acquired via MMS by period; and
∘ Receiving all information contained in MIBs via SNMP protocol.

**Step A** further comprises monitoring through the GOOSE, SMV and PTP protocols, through which the processing unit acquires the following information:
∘ All GOOSE message informational fields;
∘ GOOSE message length;
∘ GOOSE message composition;
∘ GOOSE message arrival and relay times;
∘ GOOSE message receiving sequence;
∘ GOOSE message operating mode;
∘ Sampled Value message all informational fields;
∘ Sampled Value message length;
∘ Sampled Value message composition;
∘ Sampled Value message arrival and relay times;
∘ Sampled Value message receiving sequence;
∘ Sampled Value message operating mode;
∘ Receiving packets not provided in the provided SCL file;
∘ Existence of IEEE1588 packets for PTP;
∘ Message 1588 arrival and relay times; and
∘ Altering IEEE1588 packet to PTP.

In **step B,** the processing unit carries out the comparison of the messages and/or input information of at least one of the SS components obtained in step A to the predetermined ideal values comprised in at least one SCL file of at least one memory and/or database of the processing unit. The comparison carried out in step B can also be carried out by a convolutional neural network trained according to the invention, making the comparison both between the messages and the data of the SCL file and the values contained in the messages and the data of the SCL file and/or another file or database that comprise, for example, but without limiting the invention, the expected physical quantities of each SS component.

In **step C** the processing unit, based on the comparison of the step B, determines at least one substation condition, wherein a substation condition may be at least one normal operating condition, without offsets and/or inconsistencies, and/or at least one abnormal operating condition, with at least one offset and/or inconsistency, and/or at least one critical event condition, with at least one critical offset and/or at least one critical inconsistency.

**Step D** comprises informing at least one Supervisory Control and Data Acquisition SCADA of the SS, by means of the processing unit, preferentially, but without limiting the invention, through the MMS server of the processing unit, the at least one substation condition determined in step C, in the form of output instructions, together with at least one of the offsets and/or inconsistencies and/or critical offsets and/or critical inconsistencies detected. The output instructions comprise:
∘ Alarms related to each acquired item;
∘ Reading acquired packets
∘ Statistical information of the packets;
∘ Statistical information of the monitor;
∘ PCAP file of the alarm packet; and
∘ Stream of the alarm packets.

The data and, in particular, the output instructions generated in response to at least one given station condition, comprise informing the operator or person responsible for supervising and/or maintaining the substation, by means of the remote central processor or the portable equipment processor, one or more substation condition codes and communicating at least one procedural instruction equivalent to:
- Graphical interface for accessing information;
- Through software installed on the personal computer or remote device of the SS user/operator/client/maintainer, the same will have access to:
   ∘ All events;
   ∘ Copy of the data flow at the time of the event;
   ∘ Visualization of the current communication network;
   ∘ Configuration and analysis of the SCL file;
   ∘ Configuration of the acquisition server;
   ∘ Take cybersecurity actions such as visiting the panels where the alarms occurred, blocking doors; and
   o∘ Preparation for intervention such as acquiring the correct material for replacement (network cables, optical cords, IEDs).

Furthermore, it should be noted that, by means of an interface in the form of processing equipment for acquiring and presenting information/instructions of the invention, it is possible for the user/operator to:
i. Import SCD, CID, ICD and XML type files;
ii. Real-time visualization of network packets;
iii. User configuration of the monitoring server;
iv. User configuration of alarms;
v. User configuration of alarm times;
vi. User modification of SCD files;
vii. Addition of components to be monitored; and
viii. Download in PCAP format of the packets contained in the alarms.

Furthermore, **step D** may further comprise, optionally or additionally, when submitting input information to a trained neural network, suggesting to the operator/user/client/maintainer of the SS the appropriate and necessary operating and/or maintenance measures through suggestions and/or procedural instructions for correcting the offsets and/or inconsistencies reported.

**Step E** comprises logging at least one determined and reported substation condition, where the logs further comprise data from the communication and data network message flows and data at the time of at least one offset and/or at least one inconsistency. The logging is made by the processing unit in at least one memory and/or database of the processing unit. The loggings from **step E** are essentially added to the processing unit database for the purpose of logging the activities and conditions of each of the SS elements and the SS as a whole and, additionally, to create a history of accesses and logs. It should also be noted that the logs from step E can be added to at least one additional database comprising the information from the SS SCL file updated with day-to-day operation data.

**Step F,** in turn, suggests repeating steps A to E during the substation communication bus monitoring operation and, more specifically, during substation operation, continuously and/or at predetermined intervals, as instructed in the SS SCL file and/or the operator/user.

The steps of the method for determining a substation condition of the invention can be executed in the suggested sequences or be repeated in isolation or in a grouped manner, if necessary and depending on the condition to be investigated.

All steps and possible substeps of the method of the invention are executed using directly or indirectly one or more of the active or passive components of the system of the invention, using one or more of the information of the system of the invention and always in accordance with one or more of the instructions of the system of the invention.

An interaction between the components of the system during the execution of the method of the invention occurs through their communication with each other through one or more communication and data networks and/or one or more communication buses of the substation.

Optionally, the steps of the invention method can be repeated in full or individually for the other SS components, with the decision-making process being left until the end, accumulating the decisions for a group of components, in addition to taking into account a possible autonomous execution of the method through the portable equipment, without connection to a central server or central database or any communication and data network.

That said, it is clear that, by executing the steps described above, the system of the invention determines, by means of a completely independent computing platform, the operating state of one or more SS components and of the SS as a whole, based on reading the data received from each component or the SS, by submitting the results of the readings of the input information to the processing unit or, additionally and optionally, to a machine learning model.

By associating the measured values with their predetermined ideal value, for example, described in at least one SS SCL file, the system of the invention is capable of, in addition to identifying possible discrepancies, gathering indicative information about the functioning status of each SS component or the SS as a whole, independently and completely. With this information, the system helps determine the status of each SS component and the SS, and suggests to the operator the appropriate and necessary operating and/or maintenance measures by means of procedural instructions.

### Method for training a neural network to determine a substation state of a digital substation

The method of the invention for training a neural network to determine a substation state of a digital substation, wherein a neural network refers to a machine learning model, is a method capable of adjusting the parameters of the machine learning model so that, from a number of reference input information associated with the ideal and/or expected values of each SS component and the SS as a whole, available in at least one SCL file and/or in at least one file or database that comprises the expected physical quantities for the SS components and the operation of the SS as a whole, it is capable of, from one or more input data or information comprising the measured data, providing one or more output data in the form of one or more substation conditions for one or more SS components and the SS as a whole and/or in the form of a diagnosis of the causes of any offsets and/or inconsistencies, in addition to procedural suggestions and/or instructions for correcting any offsets and/or inconsistencies.

Training serves to configure the neural network to provide diagnostics and instructions unambiguously associated with each corresponding SS component, in response to receiving, as input, the measured values of each component and/or the input messages and/or information.

The preferred neural network, without limiting the scope of the invention, is a convolutional neural network, but may be any other similar suitable architecture as long as this model is trained for this purpose, such as the convolutional neural network mentioned above. Furthermore, the trained neural network of the invention may comprise the combination of two or more architectures.

Once the convolutional neural network has been trained and the system, as a whole, has been fed with the information and instructions described herein, the processors will be ready to manage the system and its trained convolutional neural network, which comprises, in particular, the management of the entire system in accordance with the invention for the execution of the method according to the invention.

For training the convolutional neural network of the invention, at least one database is used in the form of at least one SCL file with the ideal and/or expected reference data for each of the SS components and the SS as a whole and/or at least one file or database that comprises the expected physical quantities for the SS components and the operation of the SS as a whole.

With the data from the SCL file and/or other files or additional databases, a deep feedforward convolutional neural network can be created, which may include layers of neurons that can be configured in a receptive field arranged side by side, wherein the input data are data read from the SS components and the output data are the substation conditions and the respective output instructions.

A method for training a neural network for monitoring and switching faulted phases, in accordance with the invention, comprises the following method steps:
(i) Make available at least one training data set based on data from at least one SS SLC file and/or at least one file or database that comprises the expected physical quantities for the SS components and the SS operation as a whole;
(ii) Configure a neural network to receive, as input, the input data set, wherein each training input data set corresponds to the respective expected data sets, according to the SS SCL file and/or additional file or database, for each of the SS components and the SS as a whole;
(iii) Receive training input data;
(iv) Configure the neural network to assign each SS component at least one expected value, according to the SS SCL file;
(v) Configure the neural network to generate, in response to an input data, at least one substation condition, at least one diagnosis, and at least one correction suggestion and/or output instruction; and
(vi) Produce a neural network by repeatedly training the trained convolutional neural network with each of the training datasets.

### Final remarks

It will be easily understood by one skilled in the art that modifications may be carried out to the present invention without departing from the concepts set out in the description above. Such modifications should be considered as comprised within the scope of the present invention. Consequently, the particular embodiments previously described in detail are merely illustrative and exemplary, and not limiting in terms of the scope of the present invention, to which the full extent of the accompanying claims should be given, in addition to all and any equivalents thereof.

## Claims

1. Method for supervising and monitoring the communication buses of a digital substation, **characterized in that** it is a computer-implemented method that comprises the following method steps:
A. Acquiring, by means of at least one processing unit, messages and/or input information from at least one of the SS components through at least one communication and data network and/or the SS' own communication bus, by establishing a connection via MMS protocol, a connection via layer 2, and a connection via SNMP protocol;
B. Comparing, by means of the at least one processing unit, the messages and/or input information of at least one of the SS components obtained in the previous step with the predetermined ideal values comprised in at least one SCL file of at least one memory and/or database of the processing unit;
C. Determining, by means of the processing unit, based on the comparison of the previous step, at least one substation condition, wherein a substation condition may be at least one normal operating condition, without offsets and/or inconsistencies, and/or at least one abnormal operating condition, with at least one offset and/or at least one inconsistency, and/or at least one critical event condition, with at least one critical offset and/or at least one critical inconsistency;
D. Informing, by means of the processing unit, at least one Supervisory Control and Data Acquisition SCADA of the SS, independent of the processing unit, the at least one substation condition determined in the previous step, in the form of messages and/or output instructions, together with at least one of the offsets and/or critical offsets and/or at least one of the inconsistencies and/or critical inconsistencies detected;
E. Logging, by means of the processing unit, in the at least one memory and/or database of the processing unit, the at least one determined and reported substation condition, in which the logs further comprise the data from the communication and data network messages flows and the data at the time of at least one offset and/or at least one inconsistency; and
F. Repeating steps A through E during the substation communication bus monitoring operation.

2. Method, according to claim 1, **characterized in that** in step A the input messages and/or information from at least one of the SS components are acquired by the processing unit by means of the establishment of at least one connection via MMS protocol for acquiring information relating to protection relays; at least one connection via layer 2 (layer that transmits the protocols) for acquiring GOOSE, SV, and LLDP protocols; and at least one connection via SNMP protocol for acquiring information related to switches, routers, and GNSS time synchronization units.

3. Method, according to any one of the preceding claims, **characterized in that** step A comprises monitoring through the MMS and SNMP protocols, through which the following information is acquired by the processing unit:
∘ All logical nodes requested by the user and maintained in the SCL;
∘ Receiving reports of values acquired via MMS by value alteration;
∘ Receiving reports of values acquired via MMS by quality alteration;
∘ Receiving reports of values acquired via MMS by period; and
∘ Receiving all information contained in MIBs via SNMP protocol.

4. Method, according to any one of the preceding claims, **characterized in that** step A further comprises monitoring through the GOOSE, SMV, and PTP protocols, through which the following information is acquired by the processing unit:
∘ All GOOSE message informational fields;
∘ GOOSE message length;
∘ GOOSE message composition;
∘ GOOSE message arrival and relay times;
∘ GOOSE message receiving sequence;
∘ GOOSE message operating mode;
∘ Sampled Value message all informational fields;
∘ Sampled Value message length;
∘ Sampled Value message composition;
∘ Sampled Value message arrival and relay times;
∘ Sampled Value message receiving sequence;
∘ Sampled Value message operating mode;
∘ Receiving packets not provided in the provided SCL file;
∘ Existence of IEEE1588 packets for PTP;
∘ Message 1588 arrival and relay times; and
∘ Altering IEEE1588 packet to PTP.

5. Method, according to claim 1, **characterized in that** in step B the comparison can be made both between the messages and the data of the SCL file and the values contained in the messages and the data of the SCL file and/or another file or database that comprise the expected physical quantities of each SS component.

6. Method, according to claim 1, **characterized in that** in step C the processing unit, based on the comparison of step B, determines at least one substation condition, wherein a substation condition may be at least one normal operating condition, without offsets and/or inconsistencies, and/or at least one abnormal operating condition, with at least one offset and/or inconsistency, and/or at least one critical event condition, with at least one critical offset and/or at least one critical inconsistency.

7. Method, according to claim 1, **characterized in that** in step D the output instructions comprise:
∘ Alarms related to each acquired item;
∘ Reading acquired packets
∘ Statistical information of the packets;
∘ Statistical information of the monitor;
∘ PCAP file of the alarm packet; and
∘ Stream of the alarm packets.

8. Method, according to claim 7, **characterized in that** in step D the output instructions further comprise communicating at least one procedural instruction equivalent to:
• Graphical interface for accessing information;
• Through software installed on the personal computer or remote device of the SS user/operator/client/maintainer, the same will have access to:
∘ All events;
∘ Copy of the data flow at the time of the event;
∘ Visualization of the current communication network;
∘ Configuration and analysis of the SCL file;
∘ Configuration of the acquisition server;
∘ Take cybersecurity actions such as visiting the panels where the alarms occurred, blocking doors; and
∘ Preparation for intervention such as acquiring the correct material for replacement (network cables, optical cords, IEDs).

9. Method, according to any one of claims 7 or 8, **characterized in that** step D may further comprise suggesting to the operator/user/client/maintainer of the SS the appropriate and necessary operating and/or maintenance measures by means of suggestions and/or procedural instructions for correcting the reported offsets and/or inconsistencies.

10. Method, according to claim 1, **characterized in that** in step E the logs can be added to at least one additional database comprising the information from the SS SCL file updated with the day-to-day operation data.

11. System for supervising and monitoring the communication bus and a digital substation, **characterized in that** it comprises a computer monitoring platform independent of the SCADA of the substation comprising at least one processing unit, this comprising at least one memory that stores information and computer-executable instructions, wherein the processing unit is configured to provide output data and/or output instructions about one or more substation conditions in response to the reception, as input information, of one or more messages and/or input information obtained from one or more SS components, wherein the execution of the instructions by the processing unit executes one or more steps of a method for monitoring the communication buses in a digital substation.

12. System, according to claim 11, **characterized in that** it further comprises:
- At least one processing equipment for acquiring and presenting information/instructions;
- At least one central server;
- At least one database;
- At least one communication and data network;
- One or more sets of input information;
- One or more sets of instructions; and
- Other devices and/or equipment necessary for the functioning of the system and the execution of a method in accordance with the invention.

13. System for supervising and monitoring the communication bus and a digital substation, **characterized in that** it executes at least one, preferentially all, of the steps of the method defined in any one of claims 1 to 10.

14. System for supervision and monitoring of the communication bus and a digital substation, **characterized in that** it comprises a computer monitoring platform independent of the SCADA of the substation comprising at least one processing unit, this comprising at least one memory that stores information and instructions executable by computer, wherein the processing unit is configured to determine a trained convolutional neural network.

15. System, according to claim 14, **characterized in that** the neural network is trained to compare messages and/or input information read from the SS elements to information from an SS SCD file and/or from a file or database comprising the expected values for the physical quantities of each of the SS components; detect a substation condition; provide one or more output instructions in response to one or more input messages and/or information; diagnose and generate at least one output instruction to the substation maintainer in the form of a suggested procedure for maintaining the operation and/or correcting the parameters of one or more components of the substation or the substation as a whole.

16. System, according to any one of claims 14 or 15, **characterized in that** the input messages and/or information read from the SS elements comprise the numerical values measured directly or indirectly in each SS component.

17. Method for training a neural network to determine a substation state of a digital substation, **characterized in that** it comprises the following method steps:
(i) Make available at least one training data set based on data from at least one SS SLC file and/or at least one file or database that comprises the expected physical quantities for the SS components and the SS operation as a whole;
(ii) Configure a neural network to receive, as input, the input data set, wherein each training input data set corresponds to the respective expected data sets, according to the SS SCL file and/or additional file or database, for each of the SS components and the SS as a whole;
(iii) Receive training input data;
(iv) Configure the neural network to assign each SS component at least one expected value, according to the SS SCL file;
(v) Configure the neural network to generate, in response to an input data, at least one substation condition, at least one diagnosis, and at least one correction suggestion and/or output instruction; and
(vi) Produce a neural network by repeatedly training the trained convolutional neural network with each of the training datasets.

18. Equipment for monitoring the communication bus of a digital substation, **characterized in that** it is portable and that it executes at least one, preferentially all, of the steps of the method defined in any one of claims 1 to 10.

19. Computer-readable memory, **characterized in that** it comprises a set of computer-executable instructions that, when executed, perform the method defined in any one of claims 1 to 10.
